# EUROPÄISCHE PATENTANMELDUNG

(11) **EP 3 591 132 A1**
(43) Veröffentlichungstag der Anmeldung: **08.01.2020**
(21) Anmeldenummer: 19183540.4
(22) Anmeldetag: 01.07.2019
(51) Int. Cl.: E04D 5/10, E04D 5/14, C09J 7/40

(54) **KALTSELBSTKLEBEBITUMENBAHN MIT HAFTUNGSVERMINDERTER SCHUTZFOLIE**

(30) Priorität: 02.07.2018 DE 202018103766 U
(71) Anmelder: Soprema GmbH, 68219 Mannheim (DE)
(72) Erfinder: JOCHUM, Christian, 57399 Kichhundem (DE)
(74) Vertreter: Habbel, Ludwig

(57) **Zusammenfassung**

Bei einer Kaltselbstklebebitumenbahn, kurz als SK-Bahn (1) bezeichnet, mit einer oberen, nicht klebend ausgestalteten Abdeckschicht (2), einer unterhalb der Abdeckschicht angeordneten Dichtungslage (3), einer unterhalb der Dichtungslage (3) angeordneten Verklebeschicht (4), die ein bei 20°C selbstklebend ausgestaltetes Bitumenmaterial enthält, sowie einer die Verklebeschicht (4) nach unten abdeckende Schutzfolie (5), welche auf ihrer zur Verklebeschicht (4) gerichteten Seite haftungsvermindernd ausgestaltet ist, schlägt die Erfindung vor, dass die Schutzfolie (5) auf beiden Seiten haftungsvermindernd ausgestaltet ist.

## Beschreibung

Die Erfindung betrifft eine Kaltselbstklebebitumenbahn, die nachfolgend kurz als SK-Bahn bezeichnet wird.

Aus der Praxis sind gattungsgemäße SK-Bahnen bekannt. Sie dienen beispielsweise zur Abdichtung von Flachdächern und weisen unterseitig eine bitumenhaltige Schicht auf, die bei Temperaturen ab ca. 10 °C, und jedenfalls bei der sogenannten Raumtemperatur von 20 °C, selbstklebende Eigenschaften aufweisen, so dass eine SK-Bahn auf einem Untergrund verklebt werden kann, ohne dass es einer thermischen Aktivierung z.B. mittels eines Gasbrenners bedarf.

Aufgrund der hervorragenden Verklebungseigenschaften der Verklebeschicht weisen gattungsgemäße SK-Bahnen unter der Verklebeschicht eine Schutzfolie auf, die auf ihrer zur Verklebeschicht weisenden Seite haftungsvermindernd ausgestaltet ist. Unterschiedliche Möglichkeiten sind hierzu bekannt, rein beispielsweise kann dies durch eine sogenannte Silikonisierung erfolgen, also eine Beschichtung mit einem Silikonmaterial. Durch die verminderten Hafteigenschaften wird die problemlose Entfernung der Schutzfolie von der Verklebeschicht sichergestellt.

Bei der Verlegung einer SK-Bahn wird diese zunächst noch einschließlich ihrer Schutzschicht auf den Untergrund aufgelegt und ausgerichtet, beispielsweise um wie gewünscht an eine benachbarte SK-Bahn anzuschließen. Anschließend wird die zu verlegende SK-Bahn teilweise angehoben, beispielsweise etwa zur Hälfte ihrer Länge, so dass der korrekt ausgerichtete, auf dem Untergrund liegend verbleibende Rest der SK-Bahn die Beibehaltung der gewünschten Ausrichtung sicherstellt. Nun wird in dem angehobenen Bereich der SK-Bahn die Schutzfolie entfernt und dieser Bereich der SK-Bahn mit dem Untergrund verklebt. Anschließend kann in gleicher Weise mit dem Rest der SK-Bahn verfahren werden.

Da die SK-Bahnen häufig auf den Flachdächern von Gebäuden verlegt werden, finden die vorbeschriebenen Arbeiten häufig in einigem Abstand oberhalb des Erdbodens statt. Vielfach herrschen hier, am Erdboden kaum wahrnehmbar, erheblich andere Windverhältnisse als am Erdboden, insbesondere mit höheren Windgeschwindigkeiten, Böen und ggf. Verwirbelungen aufgrund von Aufzugsschächten oder ähnlichen, den Wind ablenkenden Hindernissen. In der Praxis kommt es daher immer wieder zu Arbeitsverzögerungen, wenn beim Ablösen der Schutzfolie ein Teil der bereits abgezogenen Schutzfolie unvorhergesehen vom Wind an die Verklebeschicht gepresst wird. Insbesondere wenn dabei nicht die haftungsvermindernd ausgestaltete Seite, sondern die gegenüberliegende Seite der Schutzfolie in Kontakt mit der Verklebeschicht gerät, kann es zu erheblichen Verzögerungen kommen.

Der Erfindung liegt die Aufgabe zugrunde, eine gattungsgemäßen SK-Bahn dahingehend zu verbessern, dass diese eine problemlose Verlegung und somit einen möglichst ungestörten, raschen Arbeitsfortschritt bei der Verarbeitung der SK-Bahn ermöglicht.

Diese Aufgabe wird durch eine SK-Bahn mit den Merkmalen des Anspruchs 1 gelöst. Vorteilhafte Ausgestaltungen sind in den Unteransprüchen beschrieben.

Die Erfindung schlägt mit anderen Worten vor, die Schutzfolie beidseitig haftungsvermindernd auszugestalten. Dies ist insofern überraschend, als es für die vorgesehene Handhabung der SK-Bahn nicht erforderlich ist, die unterste Oberfläche der SK-Bahn, nämlich die Unterseite der Schutzfolie, haftungsvermindernd auszugestalten. Dadurch, dass die SK-Bahn an ihrer Oberseite eine nicht klebende Abdeckschicht aufweist, kann sie nämlich problemlos aufgerollt und so gelagert und transportiert werden, und später problemlos wieder abgerollt und auf dem Untergrund ausgelegt werden. Für die Handhabung während der Verlegung allerdings, nämlich nachdem die Schutzfolie von der Verklebeschicht abgezogen ist, bietet die vorschlagsgemäße Ausgestaltung der SK-Bahn erhebliche Vorteile in der praktischen Handhabung und verhindert eine nur schwer zu lösende Verklebung der Schutzfolie mit der Verklebeschicht, falls nach dem Ablösen der Schutzfolie doch noch ein nicht vorgesehener Kontakt der Schutzfolie mit der Verklebeschicht erfolgt.

Vorteilhaft kann die Schutzfolie einen Folienkern aufweisen, der auf seinen beiden Seiten mit einer haftungsvermindernden Beschichtung versehen ist. Auf diese Weise können die Werkstoffe für die Schutzfolie in technischer und wirtschaftlicher Hinsicht optimiert werden, denn für den Folienkern können Werkstoffe verwendet werden die wirtschaftlich zu beschaffen und zu verarbeiten sind und dabei eine hohe Reißfestigkeit aufweisen, so dass die Schutzfolie problemlos von der Verklebeschicht abgezogen werden kann, ohne dabei zu reißen. Die für den Folienkern verwendeten Werkstoffe können dabei nach den obigen Kriterien ausgewählt werden, ohne darauf Rücksicht nehmen zu müssen, dass die Schutzfolie haftungsvermindernd ausgestaltet sein muss. Dies wird vielmehr durch die zusätzliche Beschichtung bewirkt, die vorschlagsgemäß auf den beiden Seiten des Folienkerns vorgesehen sein kann und die haftungsvermindernden Eigenschaften der Schutzfolie bewirkt.

Beispielsweise kann für eine solche Beschichtung ein Silikonmaterial verwendet werden, so dass die Schutzfolie dementsprechend einen auf beiden Seiten silikonisierten Folienkern aufweist. Dies hat sich in ersten Versuchen als wirtschaftliche und funktional hervorragende Ausgestaltung der Schutzfolie herausgestellt.

Die Schutzfolie kann vorteilhaft ein Laminat aufweisen welches aus einem PP/PA/PP-Material besteht. Ein solches dreischichtiges Material kann beispielsweise durch Coextrusion hergestellt werden und vereint eine hohe Reißfestigkeit mit einer guten Anbindung einer haftungsvermindernden Beschichtung.

Vorteilhaft kann die Schutzfolie eine Materialstärke aufweisen die zwischen 25 und 30 µm beträgt. Diese Materialstärke ist einerseits hinsichtlich der Materialkosten vorteilhaft gering, und andererseits hinsichtlich Reißfestigkeit und mechanischer Stabilität, wenn sie nämlich auf dem Untergrund aufliegt, vorteilhaft robust. In ersten Versuchen hat sich eine Schutzfolie mit einer Materialstärke von 28 µm hervorragend bewährt.

Ein Ausführungsbeispiel der Erfindung wird anhand der rein schematischen und insbesondere nicht maßstabsgerechten Darstellung nachfolgend näher erläutert.

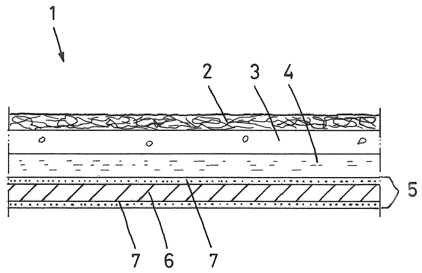

Dabei ist in der Zeichnung mit 1 insgesamt eine Kaltselbstklebebitumenbahn bzw. SK-Bahn bezeichnet. Diese weist eine obere, nicht klebende Abdeckschicht 2 auf, die bei dem dargestellten Ausführungsbeispiel als Vlieslage ausgestaltet ist. Unterhalb der Abdeckschicht 2 weist die SK-Bahn eine bituminöse Dichtungslage 3 auf, unter welche sich eine Verklebeschicht 4 befindet, die ebenfalls Bitumen enthält.

Die Verklebeschicht 4 ist nach unten durch eine Schutzfolie 5 vollflächig abgedeckt. Die Schutzfolie 5 besteht aus einem dreischichtigen, coextrudierten Folienkern 6 aus einem PP/PA/PP-Material. Auf beiden Seiten ist dieser Folienkern 6 mit einer Beschichtung 7 aus einem Silikonmaterial versehen, so dass die Schutzfolie 5 auf beiden Seiten haftungsvermindernd ausgestaltet ist.

### Bezugszeichen:

- 1: SK-Bahn
- 2: Abdeckschicht
- 3: Dichtungslage
- 4: Verklebeschicht
- 5: Schutzfolie
- 6: Folienkern
- 7: Beschichtung

## Patentansprüche

1. Kaltselbstklebebitumenbahn, kurz als SK-Bahn (1) bezeichnet,
mit einer oberen, nicht klebend ausgestalteten Abdeckschicht (2),
einer unterhalb der Abdeckschicht angeordneten Dichtungslage (3),
einer unterhalb der Dichtungslage (3) angeordneten Verklebeschicht (4), die ein bei 20°C selbstklebend ausgestaltetes Bitumenmaterial enthält,
sowie einer die Verklebeschicht (4) nach unten abdeckende Schutzfolie (5), welche auf ihrer zur Verklebeschicht (4) gerichteten Seite haftungsvermindernd ausgestaltet ist,
**dadurch gekennzeichnet,**
**dass** die Schutzfolie (5) auf beiden Seiten haftungsvermindernd ausgestaltet ist.

2. SK-Bahn nach Anspruch 1,
**dadurch gekennzeichnet,**
**dass** die Schutzfolie (5) einen Folienkern (6) aufweist, der auf seinen beiden Seiten mit einer haftungsvermindernden Beschichtung (7) versehen ist.

3. SK-Bahn nach Anspruch 2,
**dadurch gekennzeichnet,**
**dass** der Folienkern (6) auf beiden Seiten silikonisiert ist.

4. SK-Bahn nach Anspruch 2 oder 3,
**dadurch gekennzeichnet,**
**dass** die Schutzfolie (5) ein Laminat enthält, welches aus einem PP/PA/PP-Material besteht.

5. SK-Bahn nach einem der Ansprüche 2 bis 4,
**dadurch gekennzeichnet,**
**dass** die Schutzfolie (5) eine Materialstärke aufweist, die zwischen 25 und 30 µm beträgt.
